# EUROPÄISCHE PATENTSCHRIFT

(11) **EP 3 549 115 B1**
(45) Veröffentlichungstag und Bekanntmachung des Hinweises auf die Patenterteilung: **29.09.2021**
(21) Anmeldenummer: 17797124.9
(22) Anmeldetag: 06.11.2017
(51) Int. Cl.: G06K 9/00, G08B 13/196, H04N 21/454, H04N 7/18

(54) **KAMERA ZUR ÜBERWACHUNG EINES ÜBERWACHUNGSBEREICHES UND ÜBERWACHUNGSVORRICHTUNG SOWIE VERFAHREN ZUR ÜBERWACHUNG EINES ÜBERWACHUNGSBEREICHES**
CAMERA FOR MONITORING A MONITORING AREA AND MONITORING DEVICE AND METHOD FOR MONITORING A MONITORING AREA
CAMERA POUR SURVEILLER UNE ZONE DE SURVEILLANCE ET DISPOSITIF DE SURVEILLANCE ET PROCÉDÉ DE SURVEILLANCE D'UNE ZONE DE SURVEILLANCE

(30) Priorität: 30.11.2016 DE 102016223859
(43) Veröffentlichungstag der Anmeldung: 09.10.2019
(73) Patentinhaber: Robert Bosch GmbH, 70442 Stuttgart (DE)
(72) Erfinder: STRICKER, Didier, 67659 Kaiserslautern (DE); WASENMUELLER, Oliver, 67655 Kaiserslautern (DE); GEILER, Thomas, 71134 Adlingen (DE); ACKERMANN, Jens, 71229 Leonberg (DE)
(86) Internationale Anmeldenummer: PCT/EP2017/078286
(87) Internationale Veröffentlichungsnummer: WO 2018/099689

(56) Entgegenhaltungen:
- EP-A2- 2 429 182
- JP-A- 2005 286 468
- US-A1- 2006 064 384
- BELBACHIR A ED - BELBACHIR AHMED NABIL: "Chapter 16, Smart Cameras for Machine Vision", 1. Januar 2010 (2010-01-01), SMART CAM, SPRINGER, NEW YORK, NY, PAGE(S) 283 - 303, XP008157219, ISBN: 978-1-4419-0953-4 Seite 293, Zeile 20 - Zeile 27 Seite 296, Zeile 8 - Zeile 10 Seite 299, Zeile 39 - Zeile 43 Abbildung 16.3

## Beschreibung

### Stand der Technik

Die Erfindung betrifft eine Kamera zur Überwachung eines Überwachungsbereiches mit einem Kamerasensor zur Erzeugung von mindestens einem unmaskierten Überwachungsbild des Überwachungsbereiches und/oder eines Teilbereiches des Überwachungsbereiches, wobei der Kamerasensor ausgebildet ist Rohdaten bereitzustellen, wobei die Rohdaten das mindestens eine unmaskierte Überwachungsbild umfassen. Die Kamera umfasst ferner eine Auswerteeinheit, wobei die Auswerteeinheit eine Eingangsschnittstelle zur Übernahme der Rohdaten umfasst und eine Ausgangsschnittstelle zur Bereitstellung von Bilddaten umfasst. Die Auswerteeinheit umfasst ein Prüfmodul und ein Maskierungsmodul, wobei das Prüfmodul ausgebildet ist, auf Basis der Rohdaten eine Person in dem unmaskierten Überwachungsbild zu detektieren, wobei das Maskierungsmodul ausgebildet ist, ein maskiertes Überwachungsbild zu erzeugen, wobei die detektierte Person im maskierten Überwachungsbild maskiert dargestellt ist.

Kameras werden häufig zur Überwachung von Überwachungsbereichen verwendet. Beispielsweise werden hierbei Fertigungsanalagen überwacht, wodurch das Recht der Mitarbeiter in der Fertigungsanlage auf den Schutz von Persönlichkeitsrechten stark eingeschränkt sein kann. Demgegenüber haben sich Computer-Vision-Anwendungen so weit entwickelt, dass die Kameraüberwachung eine kostengünstige Lösung der Prozessüberwachung darstellt. Videoüberwachungsanlagen greifen häufig auf Sperrsensorik, wie zum Beispiel Lichtschranken und induktive Schalter, zurück, um Kameras bei Anwesenheit einer Person im Überwachungsbereich abzuschalten.

Die Druckschrift DE 10 2008 007 199 A1, die wohl den nächstkommenden Stand der Technik bildet, beschreibt ein Maskierungsmodul für ein Überwachungssystem, wobei das Überwachungssystem mindestens eine Überwachungskamera aufweist und zur Beobachtung von Überwachungsbereichen mit bewegten Objekten geeignet und/oder angeordnet ist, mit einer Auswahleinrichtung zur Auswahl von Objekten als Auswahlobjekte, wobei des Maskierungsmodul ausgebildet ist, Auswahlobjekte oder Teilbereiche davon maskiert auszugeben.

Die Druckschrift DE EP 2 429 182 A2 beschreibt ein Verfahren zur Unkenntlichmachung personenbezogener Daten einer Kamera. Mittels einer Verarbeitungseinheit macht die Kamera personenbezogene Daten erfasster Originalbilder in jeder durch den Benutzer einstellbaren Konfiguration innerhalb der Kamera unkenntlich und legt diese veränderten oder davon abgeleitete Bilder als Ergebnisbilder in einem Speicher ab oder macht sie über eine Schnittstelle zugänglich.

In der Druckschrift US 2006/0064384 A1 ist ein Sicherheitssystem zum Schutz der Privatsphäre einer Person, die sich in einem Raum aufhält, beschrieben. Das Sicherheitssystem umfasst einen Lokalisierungssensor zur Lokalisierung der Person und einen Videosensor zur Erfassung visueller Daten der Person. Es umfasst auch ein Computer-Subsystem, welches mit dem Lokalisierungssensor und mit dem Videosensor gekoppelt ist und welches festlegt, wie die visuellen Daten gemäß einer Datenschutzstufe präsentiert, gespeichert und abgerufen werden.

Ein Überwachungssystem mit einer Bildeinheit und einer Maskierungseinheit ist in der Druckschrift JP 2005 286468 A offenbart. Das Überwachungssystem verändert ein aufgenommenes Originalbild und erstellt daraus ein Maskenbild. Das Maskenbild wird gemäß einer festgelegten Autoritätsskala für mehrere Überwachungspersonen verändert und abgespeichert oder auf einem Monitor angezeigt.

### Offenbarung der Erfindung

Im Rahmen der Erfindung wird eine Kamera zur Überwachung eines Überwachungsbereiches mit den Merkmalen des Anspruchs 1 und eine Überwachungsvorrichtung mit den Merkmalen des Anspruchs 12 sowie ein Verfahren zur Überwachung eines Überwachungsbereiches mit den Merkmalen des Anspruchs 13 offenbart. Bevorzugte oder vorteilhafte Ausführungsformen der Erfindung ergeben sich aus den Unteransprüchen, der nachfolgenden Beschreibung sowie den beigefügten Figuren.

Erfindungsgemäß wird eine Kamera zur Überwachung eines Überwachungsbereiches vorgeschlagen. Die Kamera ist beispielsweise eine Farbkamera, eine Schwarzweißkamera, eine Infrarotkamera, eine 3D-Kamera, PTZ (Pan Tilt Zoom) Kamera oder dergleichen. Die Kamera ist insbesondere eine Videokamera und/oder eine Einzelbildkamera. Die Kamera ist vorzugsweise in dem Überwachungsbereich anordenbar und/oder angeordnet. Der Überwachungsbereich ist insbesondere eine Freifläche oder ein Innenbereich. Im Speziellen ist der Überwachungsbereich ein Betrieb, eine Fabrik, ein Gebäude, eine Fertigungsanlage, ein Lager, eine Halle, ein Flughafen, eine Straße und/oder ein Park.

Die Kamera umfasst mindestens einen Kamerasensor zur Erzeugung von mindestens einem unmaskierten Überwachungsbild des Überwachungsbereiches und/oder eines Teilbereichs des Überwachungsbereichs. Die Erzeugung des Überwachungsbildes ist insbesondere eine Aufnahme eines Bildes, welches den Überwachungsbereich zeigt und/oder abbildet. Der Kamerasensor umfasst und/oder ist insbesondere ein CCD-Chip oder CMOS-Chip. Der Kamerasensor ist vorzugsweise ausgebildet, ein Einzelbild, einige Bilder und/oder einen Datenstrom von Bildern, im Speziellen eine Videosequenz, als unmaskiertes Überwachungsbild zu erzeugen. Die Kamera weist insbesondere eine Aufnahmerichtung auf, wobei die Kamera mit der Aufnahmerichtung zum Überwachungsbereich und/oder den Teilbereich ausrichtbar ist. Der Kamerasensor ist ausgebildet, Rohdaten, insbesondere Rohbilddaten, bereitzustellen. Die Rohdaten umfassen mindestens ein unmaskiertes Überwachungsbild. Insbesondere umfassen die Rohbilddaten den Datenstrom von Bildern. Vorzugsweise umfassen die Rohdaten Zusatzdaten, wobei die Zusatzdaten beispielsweise ein Zeitstempel und/oder Sensordaten von Sensoren in der Kamera umfassen. Die Rohdaten sind insbesondere digitale und/oder analoge Daten.

Die Kamera umfasst eine Auswerteeinheit, wobei die Auswerteeinheit in die Kamera integriert ist. Die Auswerteeinheit ist insbesondere hardwaretechnisch ausgebildet und beispielsweise ein Prozessor, ein Elektronikbaustein, eine Computereinheit und/oder ein Mikrocontroller. Die Auswerteeinheit umfasst eine Eingangsschnittstelle zur Übernahme der Rohdaten. Die Eingangsschnittstelle ist vorzugsweise eine Kabelschnittstelle. Insbesondere umfasst der Kamerasensor einen Kamerasensorausgang zum Bereitstellen der Rohdaten, wobei der Kamerasensorausgang datentechnisch, beispielsweise mittels einer Kabelverbindung, ausschließlich mit der Eingangsschnittelle verbunden ist. Die Verbindung von Kamerasensorausgang und Eingangsschnittstelle ist vorzugsweise verzweigungsfrei- und/oder abzweigungsfrei ist, wobei zwischen Kamerasensorausgang und Eingangsschnittstelle insbesondere kein weiteres Modul angeordnet ist.

Die integrierte Auswerteeinheit umfasst eine Ausgangsschnittstelle zur Bereitstellung von Ausgangsbilddaten. Die Ausgangsschnittstelle ist eine Kabelschnittstelle oder eine Funkschnittstelle, wie beispielsweise eine WLAN-Schnittstelle, Infrarotschnittstelle oder Bluetooth-Schnittstelle. Die Ausgangsbilddaten sind vorzugsweise digitale Daten, alternativ sind die Ausgangsbilddaten analoge Daten.

Die integrierte Auswerteeinheit umfasst ein Prüfmodul. Das Prüfmodul ist insbesondere als eine Hardwarekomponente und/oder Softwarekomponente in der integrierten Auswerteeinheit ausgebildet. Das Prüfmodul ist ausgebildet, auf Basis der Rohdaten eine Person, einige und/oder alle Personen in dem unmaskierten Überwachungsbild und/oder im Überwachungsbereich zu detektieren. In dem unmaskierten Überwachungsbild und/oder dem Überwachungsbereich kann sich mindestens eine Person befinden, insbesondere kann sich in dem Überwachungsbereich zeitweilig mindestens eine Person aufhalten. Das Prüfmodul ist vorzugsweise ausgebildet, alle im Überwachungsbereich befindlichen Personen in dem unmaskierten Überwachungsbild und/oder den unmaskierten Überwachungsbildern zu detektieren. Das Prüfmodul ist insbesondre ausgebildet, die Rohdaten basierend auf Regeln, beispielsweise auf vorgegebene Parameter und/oder Charakteristika zu untersuchen, wobei die Parameter zum Auffinden von Personen und/oder zum Unterscheiden von Personen und Hintergrund ausgebildet sind. Die Parameter und/oder Charakteristika umfassen beispielsweise Formen, Geschwindigkeiten und/oder Muster.

Die integrierte Auswerteeinheit umfasst ein Maskierungsmodul. Das Maskierungsmodul ist insbesondere eine Hardwarekomponente und/oder Softwarekomponente in der Auswerteeinheit. Das Maskierungsmodul ist ausgebildet, ein maskiertes Überwachungsbild zu erzeugen. Alternativ und/oder ergänzend ist das Maskierungsmodul ausgebildet, eine Mehrzahl von maskierten Überwachungsbildern zu erstellen. In dem maskierten Überwachungsbild ist die im unmaskierten Überwachungsbild detektierte Person und/oder sind alle im unmaskierten Überwachungsbild detektierte Person maskiert dargestellt. Beispielsweise ist das maskierte Überwachungsbild das unmaskierte Überwachungsbild mit zusätzlicher Anonymisierung der Personen durch Maskierung. Die Maskierung erfolgt vorzugsweise durch eine Überdeckung, Verzerrung oder andere Unkenntlichmachung der Person. Insbesondere ist zur Anonymisierung der gesamte Körper der Person maskiert, alternativ ist nur der Kopf und/oder Augenbereich der Person maskiert.

Die Ausgangsbilddaten umfassen ausschließlich maskierte Überwachungsbilder. Insbesondere umfassen die maskierten Überwachungsbilder und/oder Ausgangsbilddaten keine unmaskierten Überwachungsbilder mit Personen und/oder unmaskierten Personen. Die Ausgangsbilddaten umfassen vorzugsweise keine personenbezogenen Informationen zu Personen in dem unmaskierten Überwachungsbereich, insbesondere umfassen die Ausgangsbilddaten keine klar erkennbaren Gesichter. Unmaskierte Überwachungsbilder ohne Personen sind insbesondere maskierte Überwachungsbilder.

Vorzugsweise umfasst die Kamera eine Kameraschnittstelle, wobei die Kameraschnittstelle datentechnisch mit der Ausgangsschnittstelle verbunden ist. Insbesondere fällt die Kameraschnittstelle mit der Ausgangsschnittstelle zusammen und/oder bildet diese. Die Ausgangsschnittstelle ist vorzugsweise ausgebildet, einem Benutzer der Kamera die Ausgangsbilddaten bereitzustellen. Die Ausgangsbilddaten können insbesondere Zusatzdaten umfassen, wie beispielsweise Sensordaten von Sensoren in der Kamera, Zeitstempel und/oder Ortsinformationen.

Es ist eine Überlegung der Erfindung, eine kostengünstige und zuverlässige Kamera bereitzustellen, mit deren Hilfe Überwachungsbereiche überwacht werden können, ohne personenbezogene Daten zu erfassen, bereitzustellen und/oder zu speichern. Die aufwändige Einzelfallprüfung mittels extra Sensorik, wie zum Beispiel mit Bewegungssensoren, wird überflüssig. Die softwaremäßige Absicherung gegen Angriffe Dritter kann nun auch einfacher gestaltet werden, da die Kamera ausgebildet ist, keine Überwachungsbilder mit personenbezogenen Informationen ausgeben zu können, welche für Dritte von Interesse sein können. Für Mitarbeiter und/oder Personen im Überwachungsbereich wird eine bessere reale und/oder gefühlte Transparenz des Anonymisierungsprozesses der Überwachungskameradaten erreicht.

In einer besonders bevorzugten Ausgestaltung der Erfindung umfasst die Kamera und/oder die integrierte Auswerteeinheit ein Segmentierungsmodul. Das Segmentierungsmodul ist ausgebildet, basierend auf den Rohdaten, das unmaskierte Überwachungsbild in einen Personenbereich und einen Hintergrundbereich zu segmentieren. Insbesondere ist das Segmentierungsmodul ausgebildet, das unmaskierte Bild in mehrere Personenbereiche und Hintergrundbereiche zu segmentieren, beispielsweise für mehrere Personen in einem Überwachungsbild mehrere Personenbereiche zu bestimmen. Die mehreren Personenbereiche und/oder Hintergrundbereiche können zusammenhängend und/oder fragmentiert sein. Der Personenbereich ist insbesondere der Bereich, der von der Person im unmaskierten und/oder maskierten Überwachungsbild eingenommen wird. Alternativ und/oder ergänzend ist der Personenbereich der Kopf- und/oder Augenbereich der Person im maskierten und/oder unmaskierten Überwachungsbild. Der Hintergrundbereich ist insbesondere der Bereich im maskierten und/oder unmaskierten Überwachungsbild, der frei von Personen ist. Als Segmentierung wird beispielsweise die Einteilung, beispielsweise virtuelle und/oder bereichsmäßige Einteilung, des unmaskierten Überwachungsbildes in zwei unterschiedliche Bereiche, nämlich die Personenbereiche und die Hintergrundbereiche, verstanden. Der Ausgestaltung liegt die Überlegung zu Grunde eine Kamera bereitzustellen, die beispielsweise basierend auf einem Regelwerk, ein Überwachungsbild in einen Bereich mit personenbezogenen Daten und einen Bereich ohne personenbezogene Daten einteilen kann.

Vorzugsweise ist das Maskierungsmodul ausgebildet, im maskierten Überwachungsbild die detektierte Person durch Einfärben und/oder Verzerren des Personenbereichs zu anonymisieren. Insbesondere ist das Maskierungsmodul ausgebildet, alle detektierten Personen durch Einfärben und/oder Verzerren der Personenbereiche zu maskieren. Vorzugsweise ist das maskierte Überwachungsbild das unmaskierte Überwachungsbild mit eingefärbtem Personenbereich, wobei der Hintergrundbereich unverändert bleibt. Das Einfärben erfolgt vorzugsweise mit großem oder kleinem Kontrast zur Umgebung des Personenbereichs.

In einer möglichen Ausgestaltung umfasst die Kamera, insbesondere die integrierte Auswerteeinheit, ein Schätzmodul. Das Schätzmodul ist ausgebildet, einen geschätzten Hintergrund für den Personenbereich zu bestimmen, wobei der geschätzte Hintergrund vorzugsweise basierend auf den Rohdaten bestimmt oder geschätzt wird. Alternativ und/oder ergänzend ist der geschätzte Hintergrund für den Überwachungsbereich in dem Schätzmodul fest hinterlegt. Ferner ist es möglich, dass der geschätzte Hintergrund durch das Schätzmodul basierend auf weiteren Bild- und/oder Sensormaterial zu jedem Zeitpunkt neu bestimmt wird. Der geschätzte Hintergrund ist der reale Hintergrund des betreffenden Bereiches und/oder eine Näherung an den Bereich den die Person und/oder die Personen im unmaskierten Überwachungsbild verdeckt/verdecken. Das Maskierungsmodul ist ausgebildet, im maskierten Überwachungsbild die detektierte Person durch Füllung des Personenbereichs im unmaskierten Überwachungsbild mit dem geschätzten Hintergrund zu maskieren. Vorzugsweise ist der mit dem geschätzten Hintergrund gefüllte Personenbereich im maskierten Überwachungsbild gerahmt, wobei durch das Rahmen im maskierten Überwachungsbild kenntlich gemacht ist, wo sich eine maskierte Person befindet. Dieser Ausgestaltung liegt die Überlegung zu Grunde, maskierte Überwachungsbilder mit möglichst unauffälliger Maskierung für Personen zu schaffen und Hintergrundinformationen nicht zu verlieren.

Besonders bevorzugt ist es, dass das Prüfmodul, das Maskierungsmodul, das Segmentierungsmodul und/oder die Auswerteeinheit als ein neuronales Netz ausgebildet ist. Insbesondere ist das neuronales Netz ein assoziativ lernendes und sich anhand der angebotenen Lernmuster in Verbindung mit dem erwarteten Ergebnis durch Rückkopplung anpassendes Netz. Das neuronale Netz wirkt vorzugsweise als nichtlinearer Filter, wobei durch Training des Netzes, wodurch die verfügbaren Parameter des Netzes eingestellt werden, eine gewünschte Filterfunktion erhalten wird. Der Ausgestaltung liegt die Überlegung zu Grunde eine besonders effektive, intelligente und/oder schnelle Möglichkeit des Segmentierens, Prüfens und Maskierens von Überwachungsbildern bereitzustellen.

In einer weiteren Ausgestaltung der Erfindung ist und/oder umfasst das Prüfmodul, das Maskierungsmodul, das Segmentierungsmodul und/oder die Auswerteeinheit ein Field Programmable Gate Array, kurz FPGA. Alternativ ist und/oder umfasst das Prüfmodul, das Maskierungsmodul, das Segmentierungsmodul und/oder die Auswerteeinheit eine andere festprogrammierte und/oder konfigurierte Elektronikbaugruppe. Insbesondere umfasst das FGPA konfigurierbare Logikelemente, wobei das FPGA zur Realisierung kombinatorischer Logik zwischen verschiedenen boolschen Verknüpfungen ausgebildet ist. Vorteil dieser Ausgestaltung ist es, eine besonders sichere, schnelle und angriffssichere Kamera mit integrierter Auswerteeinheit zu erhalten.

Insbesondere ist es vorgesehen, dass die Detektion der Person durch das Prüfmodul auf einer Fuzzy-Logik basiert. Beispielsweise ist das Prüfmodul ausgebildet, Fuzzy-Regeln zur Detektion einer und/oder mehrerer Personen in den unmaskierten Überwachungsbildern anzuwenden. Der Ausgestaltung liegt die Überlegung zugrunde, eine Kamera zur Anonymisierung bereitzustellen, für welche kein explizites mathematisches Modell zur Bewertung der Rohdaten erforderlich ist.

In einer besonders bevorzugten Ausgestaltung der Erfindung ist das Prüfmodul ausgebildet, die Detektion einer Person und/oder aller Personen im Überwachungsbereich und/oder dem unmaskierten Überwachungsbild auf Basis einer detektierten Bewegung durchzuführen. Die Bewegungsdetektion erfolgt beispielsweise durch Auswertung von mindestens zwei zeitlich beabstandet aufgenommener Überwachungsbilder eines überlappenden und/oder gleichen Teilbereiches. Alternativ und/oder ergänzend erfolgt die Bewegungsdetektion auf Sensordaten, von in der Kamera integrierter und auf den Teilbereich gerichteter Sensoren. Vorzugsweise ist das Prüfmodul ausgebildet, basierend auf der detektierten Bewegung eine Person zu verfolgen und/oder zu tracken, wobei beispielsweise Bereiche im maskierten Überwachungsbereich maskiert dargestellt sind, an welche sich die Person vermutlich hinbewegen wird. Der Ausgestaltung liegt die Überlegung zu Grunde, eine einfache Detektionsmöglichkeit und einen sichere Maskierung von Personen zur erreichen und beispielsweise durch gerichtete erweiterte Maskierung mit erhöhter Sicherheit die Gefahr von unmaskierten Personenbereichen zur reduzieren.

Erfindungsgemäß umfasst die Kamera und/oder die integrierte Auswerteeinheit ein Sperrmodul. Das Sperrmodul ist hardwaretechnisch und/oder softwaretechnisch ausgestaltet. Das Sperrmodul ist datentechnisch zwischen Maskierungsmodul und Ausgangsschnittstelle angeordnet und mit diesen datentechnisch verbunden. Das Sperrmodul ist ausgebildet ist, eine Übergabe von Rohdaten und/oder eine Übergabe von unmaskierten Überwachungsbildern zu den Ausgangsbilddaten zu sperren und/oder zu verhindern. Das Sperrmodul ist

ausgebildet die maskierten Überwachungsbilder auf Personen und/oder personenbezogene Daten zu untersuchen. Das Sperrmodul ist ausgebildet, bei einer Detektion von Personen und/oder personenbezogenen Daten in den maskierten Überwachungsbildern die Ausgabe von Ausgangsbilddaten zu sperren und/oder abzubrechen. Der Ausgestaltung liegt die Überlegung zu Grunde, eine Kamera bereitzustellen, die die Ausgabe von Überwachungsbildern mit personenbezogenen Daten nach Außen besonders sicher verhindert.

In einer weiteren Ausgestaltung der Erfindung ist das Sperrmodul ausgebildet, einen Datenfluss von Ausgangsschnittstelle in Richtung Maskierungsmodul und/oder Kamerasensor zu unterbinden. Beispielsweise ist das Sperrmodul eine datentechnische Verbindung die ausschließlich einen Datenfluss von Maskierungsmodul zu Ausgangsschnittstelle erlaubt. Insbesondere ist das Sperrmodul ausgebildet, Angriffe von außen und/oder Versuche das Maskierungsmodul auszuschalten und/oder unmaskierte Überwachungsbilder abzugreifen zu unterbinden. Der Ausgestaltung liegt die Überlegung zu Grunde, eine Sicherheitsstufe für die Kamera bereitzustellen, damit keine unmaskierten Überwachungsbilder abgreifbar sind.

Besonders bevorzugt ist es, dass Kamerasensor und Auswerteeinheit in einem gemeinsamen Gehäuse angeordnet sind. Insbesondere ist in dem gemeinsamen Gehäuse eine Mehrzahl an Kamerasensoren anordenbar, wobei die Mehrzahl der Kamerasensoren mit der Auswerteeinheit verbunden ist. In dem Gehäuse sind beispielsweise weitere Sensoren anordenbar, wie beispielsweise Bewegungssensoren, wobei die Sensoren Sensordaten bereitstellen, welche vorzugsweisen Teile der Rohdaten sind. Vorzugsweise ist die Kamera und/oder das Gehäuse nach außen auffällig optisch, zum Beispiel farblich, kenntlich gemacht, damit Personen im Überwachungsbereich die Kamera als maskierende Kamera erkennen. Dieser Ausgestaltung liegt die Überlegung zu Grunde eine einstückige Kamera und/oder Vorrichtung vorzuschlagen, die anonymisierte und markierte Überwachungsbilder eines Überwachungsbereichs aufnimmt.

Einen weiteren Gegenstand der Erfindung bildet eine Überwachungsvorrichtung zur Überwachung eines Überwachungsbereiches mit einer Mehrzahl an Kameras, wobei die Kameras einen Kamerasensor zur Erzeugung von mindestens einem unmaskierten Überwachungsbild des Überwachungsbereiches und/oder eines Teilbereiches des Überwachungsbereiches umfassen, wobei der Kamerasensor ausgebildet ist, Rohdaten bereitzustellen, wobei die Rohdaten das mindestens eine unmaskierte Überwachungsbild umfasst, mit einer integrierten Auswerteeinheit, wobei die Auswerteeinheit eine Eingangsschnittstelle zur Übernahme der Rohdaten umfasst und eine Ausgangsschnittstelle zur Bereitstellung von Ausgangsbilddaten umfasst, wobei die Auswerteeinheit ein Prüfmodul und ein Maskierungsmodul umfasst, wobei das Prüfmodul ausgebildet ist, auf Basis der Rohdaten eine Person in dem unmaskierten Überwachungsbild zu detektieren, wobei das Maskierungsmodul ausgebildet ist, ein maskiertes Überwachungsbild zu erzeugen, wobei die detektierte Person im maskierten Überwachungsbild maskiert dargestellt ist, wobei die Ausgangsbilddaten ausschließlich maskierte Überwachungsbilder umfassen. Die Überwachungsvorrichtung ist insbesondere zur Überwachung von öffentlichen Bereichen, wie Parks oder Straßen, oder nicht öffentlichen Bereichen, wie Fabriken, ausgebildet.

Weiter Merkmale, Vorteile und Wirkungen der Erfindung ergeben sich aus der nachfolgenden Beschreibung eines bevorzugten Ausführungsbeispiels der Erfindung sowie der beigefügten Figuren. Dabei zeigen:
- Figur 1: eine schematische Ansicht einer Kamera;
- Figur 2: ein unmaskiertes Überwachungsbild;
- Figur 3: ein maskiertes Überwachungsbild.

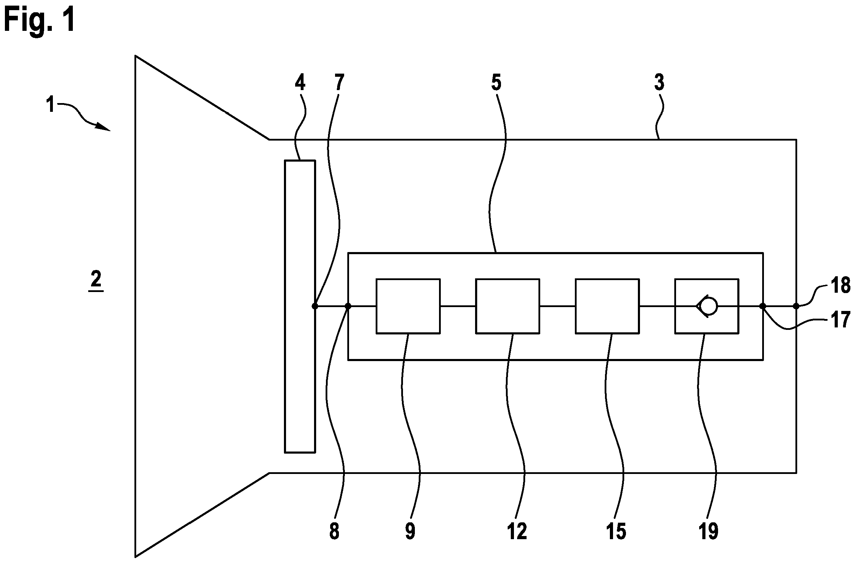

Figur 1 zeigt eine Kamera 1 in einer schematischen Ansicht. Die Kamera 1 ist eine Farbkamera und zur videotechnischen Überwachung eines Überwachungsbereichs 2 ausgebildet Der Überwachungsbereich 2 ist hierbei ein Gebäudebereich, wie beispielsweise eine Fertigungsanlage in einer Fabrik. Die Kamera 1 weist ein Gehäuse 3 auf. Das Gehäuse 3 bildet eine Kapselung der Kamerakomponenten gegenüber der Umgebung. Das Gehäuse 3 kann Befestigungsmittel zum Befestigen der Kamera 1 im Überwachungsbereich 2 aufweisen.

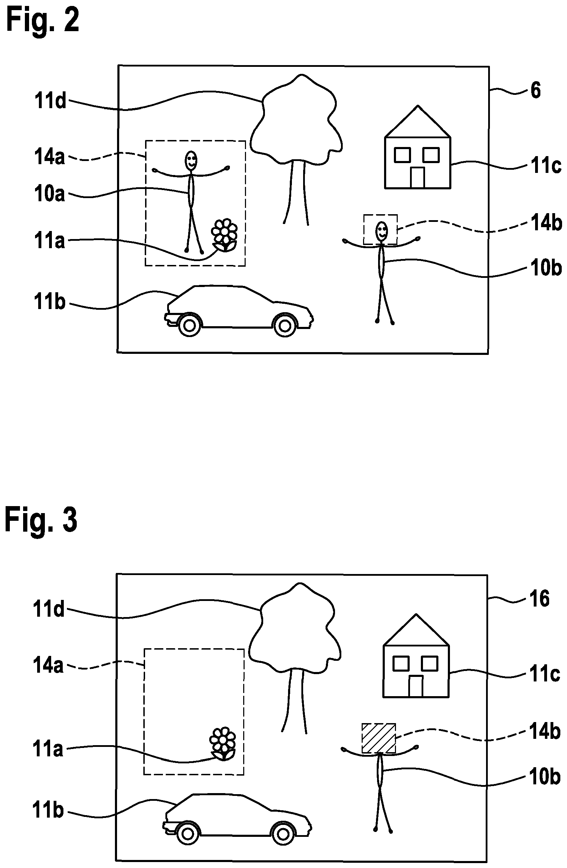

Im Gehäuse 3 sind ein Kamerasensor 4 und eine integrierte Auswerteeinheit 5 angeordnet. Der Kamerasensor 4 ein lichtsensitiver pixelierter Halbleiterchip, der mit Aufnahmerichtung zum Überwachungsbereich 2 zeigt. Der Kamerasensor 4 ist ausgebildet, unmaskierte Überwachungsbilder 6 (Figur 2) des Überwachungsbereichs 2 aufzunehmen. Der Kamerasensor 4 weist als datentechnische Schnittstelle einen Kamerasensorausgang 7 auf, wobei der Kamerasensorausgang 7 ausgebildet ist, Rohdaten bereitzustellen, wobei die Rohdaten das unmaskierte Überwachungsbild 6 umfassen.

Die integrierte Auswerteeinheit 5 ist beispielsweise ein Elektronikbaustein und weist eine Eingangsschnittstelle 8 auf, welche datentechnisch, zum Beispiel mittels einer kabelgebundenen Leitung, mit dem Kamerasensorausgang 7 verbunden ist. Der Eingangsschnittstelle 8 sind so die Rohdaten und das unmaskierte Überwachungsbild 6 bereitgestellt.

Die integrierte Auswerteeinheit 5 weist ein Prüfmodul 9 auf. Das Prüfmodul 9 ist datentechnisch mit der Eingangsschnittstelle 8 verbunden und erhält so die Rohdaten bereitgestellt. Das Prüfmodul 9 ist ausgebildet die Rohdaten und/oder die unmaskierten Überwachungsbilder 6 auf Personen 10 (Figur 2) zu prüfen und gefundenen Personen 10 als solche zu detektieren. Das Prüfmodul 9 analysiert die unmaskierten Überwachungsbilder 6 auf bestimmte Charakteristika und bewertet basierend auf einem Regelwerk, ob etwas eine Person 10 oder eine Sache 11 (Figur 2) ist.

Die integrierte Auswerteeinheit 5 umfasst ein Segmentierungsmodul 12 auf, welches ausgebildet ist, das unmaskierte Überwachungsbild 6 in Hintergrundbereich und Personenbereich 14 (Figur 2) einzuteilen. Dabei werden durch das Segmentierungsmodul 12 Bereiche im unmaskierten Überwachungsbild 6, welche eine Person 10 umfassen, als Personenbereich 14 definiert, und beispielsweise als ein vollständig überdeckendes Rechteck oder als ein Umkreis dargestellt. Bereiche ohne Personen 10 werden durch das Segmentierungsmodul 12 als Hintergrundbereich festgelegt.

Die integrierte Auswerteeinheit 5 umfasst ein Maskierungsmodul 15. Das Maskierungsmodul 15 ist ausgebildet, ein maskiertes Überwachungsbild 16 zu erstellen, wobei das maskierte Überwachungsbild 16 dem unmaskierten Überwachungsbild 6 mit farbig gefüllten und/oder hinterlegten Personenbereichen 14 entspricht. Die farbig hinterlegten Personenbereiche 14 anonymisieren Personen 10, so dass keine personenbezogenen Informationen im maskierten Überwachungsbild 16 enthalten sind. Das Maskierungsmodul 15 ist datentechnisch mit einer Ausgangsschnittstelle 17 der integrierten Auswerteeinheit 5 verbunden, wobei der Ausgangsschnittstelle 17 Ausgangsbilddaten von dem Maskierungsmodul 15 bereitgestellt werden. Die Ausgangsbilddaten umfassen das maskierte Überwachungsbild 16. Unmaskierte Überwachungsbilder 6 ohne Personen 10 und/oder ohne personenbezogene Informationen sind generelle maskierte Überwachungsbilder 16.

Das Kameragehäuse 3 weist eine Kameraschnittstelle 18, wobei mittels der Kameraschnittstelle 18 einem Benutzer die Ausgangsbilddaten bereitgestellt werden.

Zwischen Ausgangsschnittstelle 17 und Maskierungsmodul 15 ist auf der datentechnischen Verbindung ein Sperrmodul 19 angeordnet. Das Sperrmodul 19 ist ausgebildet, Hackerangriffe von außen abzuwehren. Dabei ist das Sperrmodul 19 ausgebildet, einen Datenfluss von Ausgangsschnittstelle 17 zu dem Maskierungsmodul 15 zu unterbinden, so dass das Maskierungsmodul 15 beispielsweise nicht abgeschaltet werden kann und/oder so dass unmaskierte Überwachungsbilder 6 nicht abgegriffen werden können.

Figur 2 zeigt schematisch ein unmaskiertes Überwachungsbild 6. Das unmaskierte Überwachungsbild 6 weist eine Mehrzahl an Sachen 11a, 11b und 11c und zwei Personen 10a und 10b auf. Das Prüfmodul 9 ist ausgebildet, die Personen 10a und 10b als Personen zu erkennen und von den Sachen 11a, 11b und 11c zu unterscheiden.

Das Segmentierungsmodul 12 hat das unmaskierte Überwachungsbild 6 in einen Hintergrundbereich und zwei Personenbereiche 14a und 14b aufgeteilt. Der Personenbereich 14a wird von dem Segmentierungsmodul 12 durch Umschreiben der detektierten Person 10a mit einem Rechteck erzeugt, sodass die gesamte Person 10a durch den Personenbereich 14a überdeckt ist. Der Personenbereich 14b wird von dem Segmentierungsmodul 12 durch Umschreiben des Kopfes der detektierten Person 10b mit einem Rechteck erzeugt, sodass nur der Kopf der Person 10b durch den Personenbereich 14b überdeckt ist.

Figur 3 zeigt das das auf dem unmaskierten Überwachungsbild 6 basierende maskierte Überwachungsbild 16. Das maskierte Überwachungsbild 16 zeigt die Sachen 11a, 11b, 11c und 11d aus dem unmaskierten Überwachungsbild 6. Das maskierte Überwachungsbild 16 zeigt nicht die Person 10a aus dem unmaskierten Überwachungsbild 6. Das maskierte Überwachungsbild 16 zeigt ebenso nicht den Kopf der Person 10b aus dem unmaskierten Überwachungsbild 6.

Die integrierte Auswerteeinheit 5 der Kamera 1 weist ein Schätzmodul auf. Das Schätzmodul ist ausgebildet, basierend auf dem unmaskierten Überwachungsbild 6 und/oder anderen Bildern des Überwachungsbereiches 2 einen Hintergrund für den Personenbereich 14a zu schätzen. Der Hintergrund ist insbesondere der Bereich des Überwachungsbereichs der in dem unmaskierten Überwachungsbild 6 von der Person 10a verdeckt ist. Der Hintergrund für den Personenbereich 14a stellt hier die Sache 11a dar. Das Maskierungsmodul 15 ist ausgebildet, den Personenbereich 14a im maskierten Überwachungsbild 16 gefüllt mit dem Hintergrund darzustellen. Die Person 10 ist somit maskiert dargestellt und anonymisiert. Eine weitere Maskierungsart zeigt der maskiere Personenbereich 14b. Das Maskierungsmodul 15 ist dabei ausgebildet, den Personenbereich 14b durch farbige Füllung darzustellen. Der Kopf der Person 10b ist durch die farbige Füllung im maskierten Überwachungsbild nicht mehr zu erkennen und die Person 10b so anonymisiert.

## Patentansprüche

1. Kamera (1) zur Überwachung eines Überwachungsbereiches (2)
mit einem Kamerasensor (4) zur Erzeugung von mindestens einem unmaskierten Überwachungsbild (6) des Überwachungsbereiches (2) und/oder eines Teilbereiches des Überwachungsbereiches (2), wobei der Kamerasensor (4) ausgebildet ist, Rohdaten bereitzustellen, wobei die Rohdaten das mindestens eine unmaskierte Überwachungsbild (6) umfassen,
mit einer Auswerteeinheit (5), wobei die Auswerteeinheit (5) eine Eingangsschnittstelle (8) zur Übernahme der Rohdaten umfasst und eine Ausgangsschnittstelle (17) zur Bereitstellung von Ausgangsbilddaten umfasst,
wobei die Auswerteeinheit (5) ein Prüfmodul (9) und ein Maskierungsmodul (15) umfasst,
wobei das Prüfmodul (9) ausgebildet ist, auf Basis der Rohdaten eine Person (10, 10a, 10b) in dem unmaskierten Überwachungsbild (6) zu detektieren,
wobei das Maskierungsmodul (15) ausgebildet ist, ein maskiertes Überwachungsbild (16) zu erzeugen, wobei die detektierte Person (10, 10a, 10b) im maskierten Überwachungsbild (16) maskiert dargestellt ist,
wobei die Auswerteinheit (5) eine in die Kamera (1) integrierte Auswerteeinheit (5) ist, wobei die Ausgangsbilddaten ausschließlich maskierte Überwachungsbilder (16) umfassen
**gekennzeichnet durch**
ein Sperrmodul (19), wobei das Sperrmodul (19) datentechnisch zwischen Maskierungsmodul (15) und Ausgangsschnittstelle (17) angeordnet ist, wobei das Sperrmodul (19) ausgebildet ist, die maskierten Überwachungsbilder auf Personen und/oder personenbezogene Daten zu untersuchen und bei einer Detektion von Personen und/oder personenbezogenen Daten in den maskierten Überwachungsbildern die Ausgabe von Ausgangsbilddaten zu sperren und/oder abzubrechen.

2. Kamera (1) nach Anspruch 1, **gekennzeichnet durch** ein Segmentierungsmodul (12), wobei das Segmentierungsmodul (12) ausgebildet ist, basierend auf den Rohdaten das unmaskierte Überwachungsbild (6) in einen Personenbereich (10, 10a, 10b) und einen Hintergrundbereich zu segmentieren.

3. Kamera (1) nach Anspruch 2, **dadurch gekennzeichnet, dass** das Maskierungsmodul (15) ausgebildet ist, im maskierten Überwachungsbild (16) die detektierte Person (10, 10a, 10b) durch Einfärben des Personenbereichs (14, 14a, 14b) im unmaskierten Überwachungsbild (6) zu anonymisieren.

4. Kamera (1) nach Anspruch 2, **gekennzeichnet durch** ein Schätzmodul, wobei das Schätzmodul ausgebildet ist, einen geschätzten Hintergrund für den Personenbereich (14, 14a, 14b) zu bestimmen, wobei das Maskierungsmodul ausgebildet ist, im maskierten Überwachungsbild (16) die detektierte Person (10, 10a, 10b) durch Füllung des Personenbereichs (14, 14a, 14b) im unmaskierten Überwachungsbild (6) mit dem geschätzten Hintergrund zu maskieren.

5. Kamera (1) nach einem der vorhergehenden Ansprüche, **dadurch gekennzeichnet, dass** das Prüfmodul (9), das Maskierungsmodul (15), das Schätzmodul und/oder die integrierte Auswerteeinheit (5) als ein neuronales Netz ausgebildet ist.

6. Kamera (1) nach einem der vorhergehenden Ansprüche, **dadurch gekennzeichnet, dass** das Prüfmodul (9), das Maskierungsmodul (15), das Schätzmodul und/oder die integrierte Auswerteeinheit (5) als ein Field Programmable Gate Array ausgebildet ist.

7. Kamera (1) nach einem der vorherigen Ansprüche, **dadurch gekennzeichnet, dass** die Detektion der Person durch das Prüfmodul (9) auf einer Fuzzy-Logik basiert.

8. Kamera (1) nach einem der vorherigen Ansprüche, **dadurch gekennzeichnet, dass** die Detektion der Person durch das Prüfmodul (9) auf einer Bewegungsdetektion basiert.

9. Kamera nach einem der vorhergehenden Ansprüche, **dadurch gekennzeichnet, dass** das Sperrmodul (19) ausgebildet ist, einen Datenfluss von der Ausgangsschnittstelle (17) in Richtung Maskierungsmodul (15) und/oder Kamerasensor (4) zu unterbinden.

10. Kamera (1) nach einem der vorherigen Ansprüche, **dadurch gekennzeichnet, dass** Kamerasensor (4) und Auswerteeinheit (4) in einem gemeinsamen Gehäuse (3) angeordnet sind.

11. Überwachungsvorrichtung zur Überwachung eines Überwachungsbereiches (2) mit einer Mehrzahl an Kameras (1) nach einem der Ansprüche 1-10.

12. Verfahren zur Überwachung eines Überwachungsbereiches (2) mit folgenden Schritten:
- Erzeugung von mindestens einem unmaskierten Überwachungsbild (6) des Überwachungsbereiches (2) und/oder eines Teilbereiches des Überwachungsbereiches (2) mittels eines Kamerasensors (4);
- Bereitstellen von Rohdaten mittels des Kamerasensors (4), wobei die Rohdaten das mindestens eine unmaskierte Überwachungsbild (6) umfassen;
- Bereitstellen einer Auswerteeinheit (5), wobei die Auswerteeinheit (5) eine Eingangsschnittstelle (8) zur Übernahme der Rohdaten umfasst und eine Ausgangsschnittstelle (17) zur Bereitstellung von Ausgangsbilddaten umfasst, wobei die Auswerteeinheit (5) ein Prüfmodul (9) und ein Maskierungsmodul (15) umfasst;
- Detektieren einer Person (10, 10a, 10b) in dem unmaskierten Überwachungsbild (6) auf Basis der Rohdaten mittels des Prüfmoduls (9);
- Erzeugen eines maskierten Überwachungsbildes (16) mittels des Maskierungsmoduls (15), wobei die detektierte Person (10, 10a, 10b) im maskierten Überwachungsbild (16) maskiert dargestellt ist,
- Bereitstellen von Ausgangsbilddaten, welche ausschließlich maskierte Überwachungsbilder (16) umfassen, mittels der Auswerteeinheit (5), wobei die Auswerteinheit (5) eine in die Kamera (1) integrierte Auswerteeinheit (5) ist
**gekennzeichnet durch**
die Bereitstellung eines datentechnisch zwischen Maskierungsmodul (15) und Ausgangsschnittstelle (17) angeordneten Sperrmoduls (19), wobei das Sperrmodul (19) die maskierten Überwachungsbilder auf Personen und/oder personenbezogene Daten untersucht und bei einer Detektion von Personen und/oder personenbezogenen Daten in den maskierten Überwachungsbildern die Ausgabe von Ausgangsbilddaten sperrt und/oder abbricht.

## Claims

1. Camera (1) for monitoring a monitoring region (2) comprising a camera sensor (4) for generating at least one unmasked monitoring image (6) of the monitoring region (2) and/or of a partial region of the monitoring region (2), wherein the camera sensor (4) is configured to provide raw data, wherein the raw data comprise the at least one unmasked monitoring image (6),
comprising an evaluation unit (5), wherein the evaluation unit (5) comprises an input interface (8) for accepting the raw data and comprises an output interface (17) for providing output image data,
wherein evaluation unit (5) comprises a check module (9) and a masking module (15),
wherein the check module (9) is configured to detect a person (10, 10a, 10b) in the unmasked monitoring image (6) on the basis of the raw data,
wherein the masking module (15) is configured to generate a masked monitoring image (16) wherein the detected person (10, 10a, 10b) is represented in a masked manner in the masked monitoring image (16),
wherein the evaluation unit (5) is an evaluation unit (5) integrated into the camera (1), wherein the output image data comprise exclusively masked monitoring images (16),
**characterized by**
a blocking module (19), wherein the blocking module (19) is arranged between masking module (15) and output interface (17) in terms of data technology, wherein the blocking module (19) is configured to examine the masked monitoring images for persons and/or personal data and to block and/or to terminate the outputting of output image data in the event of detection of persons and/or personal data in the masked monitoring images.

2. Camera (1) according to Claim 1, **characterized by** a segmentation module (12), wherein the segmentation module (12) is configured to segment the unmasked monitoring image (6) into a person region (10, 10a, 10b) and a background region on the basis of the raw data.

3. Camera (1) according to Claim 2, **characterized in that** the masking module (15) is configured to anonymize the detected person (10, 10a, 10b) in the masked monitoring image (16) by colorizing the person region (14, 14a, 14b) in the unmasked monitoring image (6).

4. Camera (1) according to Claim 2, **characterized by** an estimation module, wherein the estimation module is configured to determine an estimated background for the person region (14, 14a, 14b), wherein the masking module is configured to mask the detected person (10, 10a, 10b) in the masked monitoring image (16) by filling the person region (14, 14a, 14b) in the unmasked monitoring image (6) with the estimated background.

5. Camera (1) according to any of the preceding claims, **characterized in that** the check module (9), the masking module (15), the estimation module and/or the integrated evaluation unit (5) are/is configured as a neural network.

6. Camera (1) according to any of the preceding claims, **characterized in that** the check module (9), the masking module (15), the estimation module and/or the integrated evaluation unit (5) are/is configured as a field programmable gate array.

7. Camera (1) according to any of the preceding claims, **characterized in that** the detection of the person by the check module (9) is based on a fuzzy logic.

8. Camera (1) according to any of the preceding claims, **characterized in that** the detection of the person by the check module (9) is based on a motion detection.

9. Camera according to any of the preceding claims, **characterized in that** the blocking module (19) is configured to prevent a data flow from the output interface (17) in the direction of the masking module (15) and/or the camera sensor (4).

10. Camera (1) according to any of the preceding claims, **characterized in that** the camera sensor (4) and evaluation unit (5) are arranged in a common housing (3).

11. Monitoring device for monitoring a monitoring region (2) comprising a plurality of cameras (1) according to any of Claims 1-10.

12. Method for monitoring a monitoring region (2) comprising the following steps:
- generating at least one unmasked monitoring image (6) of the monitoring region (2) and/or of a partial region of the monitoring region (2) by means of a camera sensor (4);
- providing raw data by means of the camera sensor (4), wherein the raw data comprise the at least one unmasked monitoring image (6);
- providing an evaluation unit (5), wherein the evaluation unit (5) comprises an input interface (8) for accepting the raw data and an output interface (17) for providing output image data, wherein the evaluation unit (5) comprises a check module (9) and a masking module (15) ;
- detecting a person (10, 10a, 10b) in the unmasked monitoring image (6) on the basis of the raw data by means of the check module (9);
- generating a masked monitoring image (16) by means of the masking module (15), wherein the detected person (10, 10a, 10b) is represented in a masked manner in the masked monitoring image (16),
- providing output image data comprising exclusively masked monitoring images (16), by means of the evaluation unit (5), wherein the evaluation unit (5) is an evaluation unit (5) integrated into the camera (1),
**characterized by**
the provision of a blocking module (19) arranged between masking module (15) and output interface (17) in terms of data technology, wherein the blocking module (19) examines the masked monitoring images for persons and/or personal data and blocks and/or terminates the outputting of output image data in the event of detection of persons and/or personal data in the masked monitoring images.

## Revendications

1. Caméra (1) permettant de surveiller une zone de surveillance (2), comprenant
un capteur de caméra (4) pour générer au moins une image de surveillance non masquée (6) de la zone de surveillance (2) et/ou d'un secteur de la zone de surveillance (2), le capteur de caméra (4) étant réalisé pour fournir des données brutes, les données brutes comprenant ladite au moins une image de surveillance non masquée (6),
une unité d'évaluation (5), l'unité d'évaluation (5) comprenant une interface d'entrée (8) pour reprendre les données brutes et une interface de sortie (17) pour fournir des données d'image de sortie,
l'unité d'évaluation (5) comprenant un module de contrôle (9) et un module de masquage (15),
le module de contrôle (9) étant réalisé pour détecter sur la base des données brutes une personne (10, 10a, 10b) sur l'image de surveillance non masquée (6),
le module de masquage (15) étant réalisé pour générer une image de surveillance masquée (16), la personne détectée (10, 10a, 10b) étant représentée de manière masquée sur l'image de surveillance masquée (16), l'unité d'évaluation (5) étant une unité d'évaluation (5) intégrée à la caméra (1), les données d'image de sortie ne comprenant que des images de surveillance masquées (16),
**caractérisée par** un module de blocage (19), le module de blocage (19) étant disposé en termes de données entre le module de masquage (15) et l'interface de sortie (17), le module de blocage (19) étant réalisé pour rechercher sur les images de surveillance masquées des personnes et/ou des données concernant des personnes, et en cas de détection de personnes et/ou de données concernant des personnes sur les images de surveillance masquées, pour bloquer et/ou interrompre la sortie de données d'image de sortie.

2. Caméra (1) selon la revendication 1, **caractérisée par** un module de segmentation (12), le module de segmentation (12) étant réalisé pour segmenter sur la base des données brutes l'image de surveillance non masquée (6) en une zone de personnes (10, 10a, 10b) et une zone d'arrière-plan.

3. Caméra (1) selon la revendication 2, **caractérisée en ce que** le module de masquage (15) est réalisé pour anonymiser sur l'image de surveillance masquée (16) la personne détectée (10, 10a, 10b) en colorant la zone de personne (14, 14a, 14b) sur l'image de surveillance non masquée (6).

4. Caméra (1) selon la revendication 2, **caractérisée par** un module d'estimation, le module d'estimation étant réalisé pour déterminer un arrière-plan estimé pour la zone de personne (14, 14a, 14b), le module de masquage étant réalisé pour masquer sur l'image de surveillance masquée (16) la personne détectée (10, 10a, 10b) en remplissant la zone de personne (14, 14a, 14b) sur l'image de surveillance non masquée (6) avec l'arrière-plan estimé.

5. Caméra (1) selon l'une quelconque des revendications précédentes, **caractérisée en ce que** le module de contrôle (9), le module de masquage (15), le module d'estimation et/ou l'unité d'évaluation (5) intégrée sont réalisés sous la forme d'un réseau neuronal.

6. Caméra (1) selon l'une quelconque des revendications précédentes, **caractérisée en ce que** le module de contrôle (9), le module de masquage (15), le module d'estimation et/ou l'unité d'évaluation (5) intégrée sont réalisés sous la forme d'un réseau prédiffusé programmable par l'utilisateur.

7. Caméra (1) selon l'une quelconque des revendications précédentes, **caractérisée en ce que** la détection de la personne par le module de contrôle (9) est basée sur une logique floue.

8. Caméra (1) selon l'une quelconque des revendications précédentes, **caractérisée en ce que** la détection de la personne par le module de contrôle (9) est basée sur une détection de mouvement.

9. Caméra selon l'une quelconque des revendications précédentes, **caractérisée en ce que** le module de blocage (19) est réalisé pour empêcher un flux de données de l'interface de sortie (17) en direction du module de masquage (15) et/ou du capteur de caméra (4).

10. Caméra (1) selon l'une quelconque des revendications précédentes, **caractérisée en ce que** le capteur de caméra (4) et l'unité d'évaluation (4) sont disposés dans un boîtier commun (3).

11. Dispositif de surveillance permettant de surveiller une zone de surveillance (2) à l'aide d'une pluralité de caméras (1) selon l'une quelconque des revendications 1 à 10.

12. Procédé permettant de surveiller une zone de surveillance (2), comprenant les étapes suivantes consistant à :
- générer au moins une image de surveillance non masquée (6) de la zone de surveillance (2) et/ou d'un secteur de la zone de surveillance (2) au moyen d'un capteur de caméra (4) ;
- fournir des données brutes au moyen du capteur de caméra (4), les données brutes comprenant ladite au moins une image de surveillance non masquée (6) ;
- fournir une unité d'évaluation (5), l'unité d'évaluation (5) comprenant une interface d'entrée (8) pour reprendre les données brutes et une interface de sortie (17) pour fournir des données d'image de sortie, l'unité d'évaluation (5) comprenant un module de contrôle (9) et un module de masquage (15) ;
- détecter une personne (10, 10a, 10b) sur l'image de surveillance non masquée (6) sur la base des données brutes au moyen du module de contrôle (9) ;
- générer une image de surveillance masquée (16) au moyen du module de masquage (15), la personne détectée (10, 10a, 10b) étant représentée de manière masquée sur l'image de surveillance masquée (16),
- fournir des données d'image de sortie qui ne comprennent que des images de surveillance masquées (16), au moyen de l'unité d'évaluation (5), l'unité d'évaluation (5) étant une unité d'évaluation (5) intégrée à la caméra (1),
**caractérisé par** la fourniture d'un module de blocage (19), disposé en termes de données entre le module de masquage (15) et l'interface de sortie (17), dans lequel le module de blocage (19) recherche sur l'image de surveillance masquée des personnes et/ou des données concernant des personnes, et en cas de détection de personnes et/ou de données concernant des personnes sur l'image de surveillance masquée, bloque et/ou interrompt la sortie de données d'image de sortie.
